Europäisches Patentamt

(19) European Patent Office

Office européen des brevets

(11) Publication number: **0 059 711**
**B1**

(12) **EUROPEAN PATENT SPECIFICATION**

(45) Date of publication of patent specification: **15.01.86**

(21) Application number: **81901352.5**

(22) Date of filing: **10.09.80**

(86) International application number:
**PCT/US80/01165**

(87) International publication number:
**WO 82/00809 18.03.82 Gazette 82/08**

(51) Int. Cl.⁴: **B 62 D 27/06**

(54) **GEAR SHIFT CONNECTING APPARATUS.**

(43) Date of publication of application:
**15.09.82 Bulletin 82/37**

(45) Publication of the grant of the patent:
**15.01.86 Bulletin 86/03**

(84) Designated Contracting States:
**CH DE FR GB LI NL SE**

(56) References cited:
**DE-A-2 037 310**
**DE-A-2 527 407**
**FR-A-2 123 660**
**FR-A-2 167 825**
**FR-A-2 231 535**
**FR-A-2 327 881**
**FR-A-2 355 189**
**GB-A-2 006 898**
**US-A-1 876 709**
**US-A-3 329 229**
**US-A-3 667 566**
**US-A-3 761 123**
**US-A-4 269 282**

(73) Proprietor: **Applied Power Inc.**
**250 South Executive Drive**
**Brookfield Wisconsin 53005 (US)**

(72) Inventor: **REYNOLDS, Roy**
**650 Devonshire Lane**
**Crystal Lake, IL 60014 (US)**

(74) Representative: **Wilson, Nicholas Martin et al**
**WITHERS & ROGERS 4 Dyer's Buildings Holborn**
**London EC1N 2JT (GB)**

Courier Press, Leamington Spa, England.

## Description

Technical Field

This invention relates to a connection assembly. More specifically this invention relates to a gear shift connection apparatus for a tiltable, over-the-engine, tractor cab.

In the trucking industry the tractor portion of a tractor trailer combination is often designed with the cab mounted on top of the tractor engine and transmission. Such a design, among other things, minimizes the overall length of the rig and is in widespread and popular use.

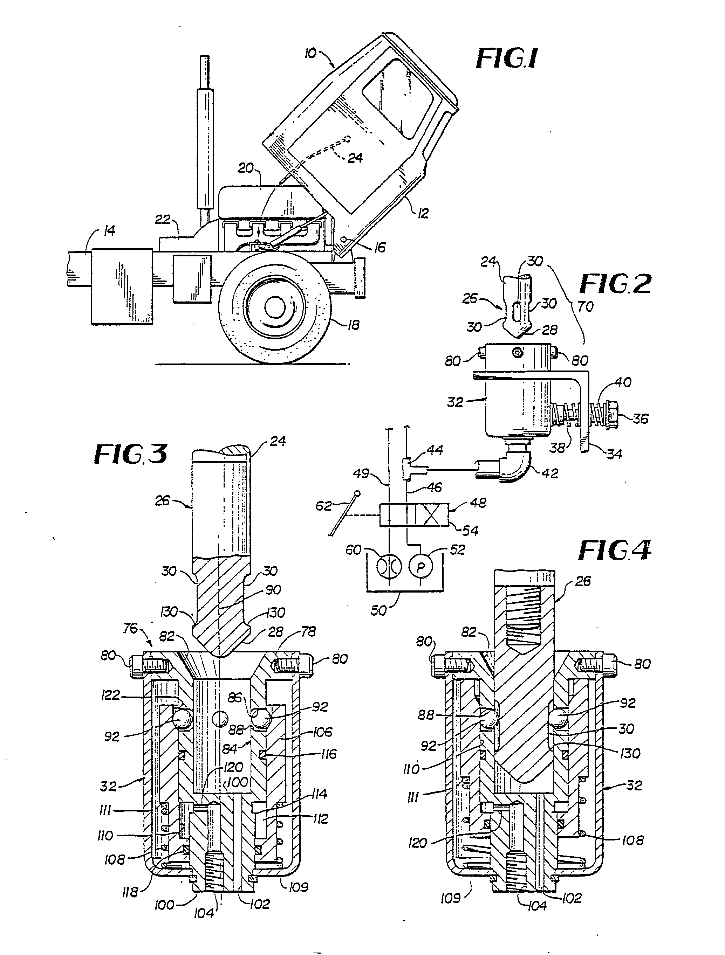

In order to service and/or work on the engine of such a tractor design the cab is tilted upward to expose the engine and drive train. At least one illustration of such a unit may be found by reference to United States Patent No. 3,761,123 to Neill et al. and of common assignment with the subject application. In this patented design a hydraulic cylinder is utilized to tilt the cab from a normal horizontal position to a tilted posture as depicted in FIGURE 1 of the patent.

In order to lock the cab in a normally lowered operating position the present applicant has invented a novel hydraulic coupling which forms the subject matter of a copending application serial number 696,591 entitled LATCHING MECHANISM now United States Patent No. 4,082,342.

A significant problem with tractors having an over-the-engine cab design is that the gear shift rod which is connected to the gear box, must also project into the cab adjacent an operators station. When the tractor cab is tilted upwardly for service some provision must be made to accommodate the gear shift rod.

One solution to the gear shift problem entails providing a slot in the cab floor so that the shift rod will pass through the slot when the cab is tilted forward. Leather or rubber sealing strips are fitted along each side of the slot to reduce engine noise and prevent dust and cold air from blowing into the cab. These strips, however, are considered only marginally effective in a new condition and in a worn or used condition typically do not function in an acceptable manner.

Another previously known design provides a mechanical telescopic coupling between a gear shift rod and a gear box. When the cab is tilted forward the connection telescopes outwardly. At least one difficulty with such a design is that it is somewhat mechanically complicated, expensive to initially install and maintain and subject to fouling and jamming.

Yet another previously suggested design is that disclosed in FR—A—2167825, which shows the gear shift rod of a tiltable tractor cab connected to a chassis of the tractor when the tractor cab is in the normal lowered position and disconnected from the chassis when the tractor cab is raised. In one embodiment, the connection includes a housing (17) mounted upon the gear shift rod and connection means (3, 5) mounted on the chassis; and in another embodiment the housing is mounted in the chassis, and the connection means (3, 5) on the gear shift rod. A disadvantage of these previous embodiments is that the gear shift rod can be inadvertently disconnected, there being no latch or lock. Thus whilst provision has been made for some relative movement in the connection so as to permit with the cab lowered, gear transfer movements, and to accommodate vibration as when travelling over rough ground, no means are disclosed in French A—2167825 to limit these allowed relative movements to prevent complete and unwarranted disconnection. Furthermore, the disclosed connection of French A—2167825 is open to the atmosphere, and so subject to dirt and moisture ingress, resulting in possible faulty operation.

The difficulties suggested in the preceding three paragraphs are not intended to be exhaustive, but rather are among many which may tend to reduce the effectiveness of prior designs for accommodating a gear shift rod in an over-the-engine cab. Other noteworthy problems may also exist; however, those presented above should be sufficient to demonstrate that designs appearing in the past will admit to worthwhile improvement.

It would be desirable to provide a connection assembly wherein the gear shift rod could be reliably released from connection to the tractor chassis when the cab is tilted forward and reconnected to the chassis when the cab is lowered again. Additionally it would be highly desirable to provide a connection system which is automatic in operation and does not require special operator attention or consideration.

Objects of the Invention

Accordingly it is a general object of the invention to provide a novel gear shift connection apparatus which will obviate and/or minimize problems of the type previously described.

It is a particular object of the invention to provide a novel gear shift connection apparatus which will enable a gear shift rod to be released from connection to a tractor chassis as the tractor cab is tilted forward.

It is another object of the invention to provide a novel gear shift connection apparatus which will provide automatic release and reconnection as a tractor cab is raised and lowered respectively.

It is still another object of the invention to provide a novel gear shift connection apparatus which is operable to lock the gear shift to the tractor chassis when the tractor cab is in a lowered normal position.

It is a further object of the invention to provide a novel gear shift connection apparatus which will be enclosed and relatively service free.

It is yet a further object of the invention to provide a novel gear shift connection apparatus which will be substantially free from jamming.

It is yet still a further object of the invention to provide a novel gear shift connection apparatus which is relatively inexpensive to install and may be fitted to existing equipment.

## Brief Summary of the Invention

A gear shift connection apparatus intended to accomplish at least some of the foregoing objects includes a cup shaped housing operably mounted upon a tractor chassis. A connection member is formed at the lowermost end of the gear shift rod and includes a conical mating tip and lateral recesses to receive a locking member.

A hydraulically actuated locking assembly is mounted within the housing and includes a cylindrical cup operable to receive the connection portion of the gear shift rod; in one mode spherical locking members carried by a cylindrical sleeve radially engage a connection portion of the gear shift rod and a locking/disabling sleeve is telescopically mounted about the cylindrical sleeve and biased in a posture to retain the spherical locking members in contact with the gear shift rod. In a release mode a hydraulic chamber is actuated and the locking/disabling sleeve slides out of a backup contact with the spherical locking members. The locking members are then cammed out of engagement with the gear shift rod to permit the gear shift rod to be separated from the housing and tractor chassis.

Thus according to the invention, we provide a gear shift connecting apparatus of the type operable to connect a gear shift rod of a tiltable tractor cab to a gear box assembly mounted upon a chassis portion of the tractor, said gear shift connecting apparatus comprising:

housing means operably mounted upon one of a gear shift rod of a tiltable tractor cab and a gear box assembly mounted upon the tractor chassis; and connection means operably mounted upon the other of the gear shift rod and the gear box assembly mounted upon the tractor chassis (as disclosed in FR—A—2167825), characterised by hydraulically actuated locking means mounted within said housing means for securing the gear shift rod to the tractor chassis when the tractor cab is in a normal lowered position and releasing the gear shift rod from the tractor chassis when the tractor cab is raised in a tilted posture.

## Brief Description of Drawings

Other objects and advantages of the invention will become apparent from the following detailed description taken in conjunction with the accompanying drawings wherein:

FIGURE 1 is a side view of a tractor having a tiltable cab which comprises the operative environment of the subject invention;

FIGURE 2 is a side view of a gear shift connection apparatus forming the subject matter if the instant invention with a schematic hydraulic actuation system connected thereto;

FIGURE 3 is a cross-sectional detail view of the subject gear shift connection apparatus in a connection/release posture; and

FIGURE 4 is a cross-sectional detail view of the gear shift connection in a coupled position.

## Detailed Description

Referring now to the drawings wherein like numerals indicated like parts and particularly FIGURE 1 thereof there will be seen a cab-over-the-engine type of tractor 10 which comprises the operative environment of the subject invention.

The tractor cab 12 is pivotally connected to a forward portion of the tractor chassis 14 as at 16. The tractor chassis is supported above the ground by conventional axle and wheel assemblies 18. The chassis carries the tractor engine 20 and drive train 22.

The tractor cab 12 has a gear shift rod 24 mounted through a closed ball joint connection in the cab floor (not shown) and projects beneath the cab for connection with a conventional gear box assembly (also not shown) and finally the vehicle chassis 14.

Referring now to FIGURE 2 it will be seen that the gear shift rod 24 terminates with a connection means 26 comprising an extension having a conical mating tip 28 and elongate lateral connection recesses 30.

A cylindrical cup shaped housing 32 is resiliently connected to a mounting bracket 34 through the provision of an axial bolt 36 and double compression spring arrangement 38 and 40.

A hydraulic line 42 connections into the base of the housing 32 for reasons which will become apparent hereinafter and is tied via a tee 44 directly into a powerline 46 of a hydraulic cylinder cab tilting circuit 48.

Such a hydraulic tilting circuit is described in detail in the previously identified Neill et al. patent but briefly includes a power line 46 going to a raising side of a hydraulic piston and cylinder combination (not shown) and a return line 49 returning from a downstream side of the cylinder.

The raising or power line 46 is delivered pressurized hydraulic working fluid from a sump 50 via a pump 52. A parallel/crossing path reversing valve 54 is interposed between the pump 52 and hydraulic cylinder (not shown) and serves in a parallel mode to deliver working fluid directly to a raising side of the cylinder via line 46 and to said housing 32 of the subject invention via tee 44 and line 42.

The hydraulic fluid return line 48 feeds through a resistor 60 and back to the sump 50 to controllably cycle fluid out of the cab tilting cylinder.

Actuation of the lever 62 and valve 54 into a crossing posture delivers lowering fluid to the high side of the lifting cylinder to induce lowering of the tractor cab 12. Concomitantly fluid drains from the lines 46 and 42 slowly through the resistance 60 as the cab lowers back into a normal horizontal posture and as the gear shift connection means 26 enters the chassis mounted housing 32.

Referring now particularly to FIGURES 3 and 4 there will be seen detail cross-sectional views of the subject gear shift connection apparatus.

More specifically the apparatus 70 includes a cup shaped housing 32 which is preferably mounted upon the tractor chassis, a connection means 26 and a latching/release means 76 mounted within the housing 32.

As previously noted the connection means 26 includes a conical nose or tip 28 and a plurality of axially extending grooves or recesses 30. The connection member 26 moves with the over-the-engine tractor cab 12 into and out of engagement with a connecting/release means 76 mounted with the housing 32.

The locking or connnecting/release means 76 includes a generally cup-shaped, cylindrical sleeve member 78 which is connected to the brim of the cup 32 by a plurality of radially directed machine bolts 80. The sleeve member 78 includes an open mouth portion 82 adapted to receive and guide the tip 28 of the connection member 26 into a sleeve portion 84 of the cup 78.

The sleeve portion 84 is fashioned with a plurality of radially extending ports 86 having inwardly tapered openings 88 looking into the interior of the sleeve 84 toward a central longitudinal axis thereof 90.

The radial ports 86 each operably carry a spherical locking member 92 having a diameter less than the diameter of the ports 86 but greater than the diameter of openings 88. Accordingly the spherical locking members 92 are free to radially translate within the ports 86 and at least partially project into the cylinder 84 but will not fall into the cylinder due to the limitation provided by the diameter of openings 88.

A base 100 is formed at the bottom of the sleeve 84 and includes a first axial bore or aperture 102 which is open to the ambient environment. Stray fluid or dust which may tend to accumulate within the cup 78 is thus permitted to vent to the atmosphere. The base 100 further includes a second axial bore 104 which is connected directly to hydraulic line 42 to operably direct pressurized fluid into the housing 32 to release the connection member 26 from the connection/release means 76 in a manner which will be discussed more fully below.

The connecting/release means 76 further includes locking/disabling sleeve 106 which telescopes with respect to the cylindrical sleeve portion 84 of the cup-shaped member 78.

The locking/disabling sleeve 106 is biased by a compression spring 108 which extends between a base portion 109 of the housing 32 and a ledge 111 of the telescoping sleeve 106. The spring 108 biases the sleeve 106 into a locking posture, note FIGURE 4, wherein an inner cylindrical surface 110 of the sleeve 106 is axially positioned adjacent the radially movable locking spheres 92. In this position the locking spheres 92 project through the openings 88 and into engagement with the recesses 30 formed within the connection member 26. Accordingly the connection member 26 is locked within the housing 32.

An annular hydraulic chamber 112 is formed between an inner cylindrical surface 110 of the telescoping sleeve 106 and an outer cylindrical surface 114 of the base portion 100 of the cup shaped member 78. Upper and lower annular seals 116 and 118 serve to fluidically isolate the annular hydraulic chamber 112 from the interior of the housing 32. A radial port 120 extends between the bore 104 and the annular chamber 112 and serves to convey pressurized fluid into and away from the chamber 112.

An annular recessed rim 122 is formed at the upper end of the locking/disabling sleeve 106. When the annular rim is brought into axial juxtaposition with respect to the spherical locking members 92 withdrawal force on the connection member 26 will bring camming surfaces 130 into contact with the locking spheres and prevent spheres 92 from moving outwardly into upper annular rim 122.

In operation the gear shift connecting apparatus would be in a locked posture such as depicted in FIGURE 4. When it was desired to work on and/or service the tractor engine an operator sets the valve in the parallel posture depicted in FIGURE 2 and actuates the hydraulic pump 52. Pressurized hydraulic fluid is then pumped into a cab lifting cylinder (not shown) and into the annular chamber 112 via tee 44, line 42, bore 104 and radial feed 120.

The telescoping sleeve 106 will be translated against biasing spring 108 to a position depicted in FIGURE 3. As the cab is tilted forward the camming surfaces 130 of the connection member 26 will push the locking spheres 92 into a disabled posture within the annular recess 122. The connection member 26 is then free to move out of the housing with the tractor cab.

When the repair or servicing work is completed and the operator pulls the valve 48 into a crossing mode. Hydraulic fluid from the raised cylinder and annular chamber 112 is then vented through a restrictor 60 back to the sump 50.

The restrictor will maintain a back pressure on the hydraulic fluid as the cab is lowered and will accordingly maintain the sleeve 106 in a disabled posture. Once the cab is completely lowered and the connection member 26 is again positioned within the housing 32 the pressure within line 46 and 42 will be bled down sufficiently such that the spring 108 will be sufficient to overcome the hydraulic fluid in the annular chamber 112 and telescope the sleeve back into a locking position as depicted in FIGURE 4.

In describing the invention, reference has been made to a preferred embodiment of the invention, those skilled in the art will recognize several advantages which are expressly and/or inherently disclosed.

In brief summary, however, a particularly significant aspect of the instant invention is the provision of a gear shift connection member and a connecting/release means which permits the gear shift to be disconnected from the tractor chassis when an over-the-engine cab is tilted upwardly. Additionally in this vein the subject gear shift connecting apparatus provides an automate release and reconnection as the tractor cab is tilted without requiring special operator attention.

The instant invention provides a secure lock for the gear shift when the cab is in a lowered position and also permits a degree of resiliency at the connection to accommodate force transmissions.

Additionally the subject connection apparatus is self enclosed and is free from most jamming difficulties while requiring little service attention.

Still further the gear shift connecting apparatus may be compatibly fitted with existing equipment and is relatively inexpensive to install.

**Claims**

1. A gear shift connecting apparatus of the type operable to connect a gear shift rod of a tiltable tractor cab to a gear box assembly mounted upon a chassis portion of the tractor, said gear shift connecting apparatus comprising:

housing means operably mounted upon one of a gear shift rod of a tiltable tractor cab and a gear box assembly mounted upon the tractor chassis; and connection means operably mounted upon the other of the gear shift rod and the gear box assembly mounted upon the tractor chassis; characterised by hydraulically actuated locking means (76) mounted within said housing means (32) for securing the gear shift rod (24) to the tractor chassis (14) when the tractor cab (12) is in a normal lowered position and releasing the gear shift rod (24) from the tractor chassis (14) when the tractor cab (12) is raised in a tilted posture.

2. A gear shift connecting apparatus as claimed in Claim 1 characterised in that said locking means (76) includes a cylindrical sleeve (78) mounted within the interior of said housing means (32) for operably receiving said connection means (26);

means (92) carried by said cylindrical sleeve (78) for selectively engaging or releasing said connection means (26); and

a locking/disabling sleeve (106) telescopically surrounding said cylindrical sleeve (78) for operably retaining said means (92) in an actuated position or permitting said means (92) to become disabled and release from engagement with said connection means (26).

3. A gear shift connecting apparatus as claimed in Claim 2 characterised in that said locking means (76) includes:

means (92) carried within apertures (88) fashioned radially through said cylindrical sleeve (78) for radial movement toward and away from a central axis of said cylindrical sleeve (78) and into and out of locking engagement with said connection means (26).

4. A gear shift connecting apparatus as claimed in Claim 3 characterised in that said locking means (76) further includes:

an upper annular recess in the inner rim portion (122) of said locking/disabling sleeve (106) for permitting said means (92) carried within said apertures (88) to travel radially away from the central axis of said cylindrical sleeve (78) and out of engagement with said connection means (26) when said annular recess is axially brought into juxtaposition with said locking means (76); and

annular hydraulic chamber means (112) for axially telescoping said locking/disabling sleeve with respect to said cylindrical sleeve (78) to selectively bring said annular recess into axial juxtaposition with said locking means (76);

spring means connected to said locking/disabling sleeve (106) for normally bracing said locking/disabling sleeve (106) in an axial telescoping posture with respect to said cylindrical sleeve (78) so as to lock said means (92) carried within apertures (88) in said cylindrical sleeve (78) in radial engagement with said connection means (26).

5. A gear shift connecting apparatus as claimed in Claim 4 characterised in that said means (92) carried within said apertures (88) comprises spherical ball means which may be operably carried into and out of locking engagement with said connection means (26).

6. A gear shift connecting apparatus as defined in Claim 5 characterised in that said hydraulically actuated locking means includes:

a generally cylindrical cup (78) mounted within the interior of said housing means (32) for operably receiving said connection means (26); and

an aperture (102) fashioned through the base (100) of said cylindrical cup (78) and said housing means (32) for venting fluid inadvertently collected within said cylindrical cup (78).

7. A gear shift connecting apparatus as defined in Claim 5 wherein:

said housing means (32) resiliently mounted upon the tractor chassis (14) to permit a degree of motion relative to the tractor chassis.

**Patentansprüche**

1. Gangschalt-Verbindungsvorrichtung, welche eine Schaltstange eines kippbaren Zugmaschinenfahrerhauses mit einem an einem Chassisteil der Zugmaschine angebrachten Getriebeaufbau verbindend betreibbar ist, wobei die Gangschalt-Verbindungsvorrichtung

Gehäusemittel, die entweder an einer Schaltstange eines kippbaren Zugmaschinenfahrerhauses oder einem am Zugmaschinenchassis angebrachten Getriebeaufbau angebracht sind; und Verbindungsmittel, die entweder an dem am Zugmaschinenchassis angebrachten Getriebeaufbau oder am Schalthebel angebracht sind, umfaßt und gekennzeichnet ist durch innerhalb der Gehäusemittel (32) angebrachte hydraulisch betätigte Verriegelungsmittel (76) zum Festmachen der Schaltstange (24) am Zugmaschinenchassis (14), wenn sich das Zugmaschinenfahrerhaus (12) in der abgesenkten Normalstellung befindet, und zum Lösen der Schaltstange (24) von Zugmaschinenchassis (14), wenn das Zugmaschinenfahrerhaus (12) in eine gekippte Stellung angehoben ist.

2. Gangschalt-Verbindungsvorrichtung nach Anspruch 1, gekennzeichnet dadurch, daß die Verriegelungsmittel (76) eine innerhalb der Gehäusemittel (32) angebrachte zylindrische Büchse (78) zur Aufnahme der Verbindungsmittel (26) enthalten;

durch von der zylindrischen Büchse (78) gehaltene Mittel (92) zur ausgewählten Erfassung oder Lösung der Verbindungsmittel (26); und

eine die zylindrische Büchse (78) teleskopisch umgebende Verriegelungs/Sperrbüchse (106) zum Halten der Mittel (92) in einer betätigten Stellung oder Gestatten, daß die Mittel (92) umwirksam gemacht und aus dem Eingriff mit den Verbindungsmitteln (26) gelöst werden.

3. Gangschalt-Verbindungsvorrichtung nach Anspruch 2, dadurch gekennzeichnet, daß die Verriegelungsmittel (76);

in radial in der zylindrischen Büchse (78) ausgebildeten Öffnungen (88) gehaltene Mittel (92) für eine radiale Bewegung zu und von einer Mittelachse der zylindrischen Büchse (78) und in und außer Verriegelungseingriff mit den Verbindungsmitteln (26) enthalten.

4. Gangschalt-Verbindungsvorrichtung nach Anspruch 3, dadurch gekennzeichnet, daß die Verriegelungsmittel (76) ferner

eine obere ringförmige Ausnehmung im inneren Randabschnitt (122) der Verriegelungs/Sperrbüchse (106), welche ermöglichen, daß die innerhalb der Öffnungen (88) gehaltenen Mittel (92) sich in radialer Richtung von der Mittelachse der zylindrischen Büchse (78) außer Eingriff mit den Verbindungsmitteln (26) bewegen, wenn die ringförmige Ausnehmung axial in Nebeneinanderstellung zu den Verriegelungsmitteln (76) gebracht wird; und

hydraulische Ringkammermittel (112) für ein axiales Ineinanderschieben der Verriegelungs/Sperrbüchse in Bezug auf die zylindrische Büchse (78), um damit die ringförmige Ausnehmung ausgewählt in axiale Nebeneinanderstellung zu den Verriegelungsmitteln (76) zu bringen;

mit der Verriegelungs/Sperrbüchse (106) verbundene Federmittel, welche die Verriegelungs/Sperrbüchse (106) normalerweise in einer axialen Verschiebestellung in Bezug auf die zylindrische Büchse (78) so festlegen, daß die innerhalb der Öffnungen (88) der zylindrischen Büchse (78) gehaltenen Mittel (92) in radialem Eingriff mit den Verbindungsmitteln (26) verriegelt werden, enthalten.

5. Gangschalt-Verbindungsvorrichtung nach Anspruch 4, dadurch gekennzeichnet, daß die innerhalb der Öffnungen (88) gehaltenen Mittel (92) Kugelmittel umfassen, welche in und außer Verriegelungseingriff mit den Verbindungsmitteln (26) geführt werden können.

6. Gangschalt-Verbindungsvorrichtung nach Anspruch 5, dadurch gekennzeichnet, daß die hydraulisch betätigten Verriegelungsmittel

einen innerhalb der Gehäusemittel (32) angebrachten im wesentlichen zylindrischen Napf (78) zur Aufnahme der Verbindungsmittel (26); und

eine in der Basis (100) des zylindrischen Napfes (78) und der Gehäusemittel (32) ausgebildete Öffnung (102) zur Ableitung von unbeabsichtigt innerhalb des zylindrischen Napfes (78) angefangenem Fluid enthalten.

7. Gangschalt-Verbindungsvorrichtung nach Anspruch 5, bei welcher

die Gehäusemittel (32) elastisch an dem Zugmaschinenchassis (14) angebracht sind, damit sie sich in Bezug auf das Zugmaschinenchassis in einem gewissen Mäße bewegen können.

**Revendications**

1. Appareil d'embrayage de changement de vitesse du type utilisable pour relier une bielle de changement de vitesse d'une cabine de tracteur inclinable, à un ensemble d'une boîte de vitesses monté sur une partie de châssis du tracteur, cet appareil d'embrayage de changement de vitesse comprenant:

— des moyens de boîtier montés en fonctionnement sur l'une des bielles de changement de vitesse d'une cabine de tracteur inclinable, et un ensemble de boîte de vitesses monté sur le châssis du tracteur, et

— des moyens d'embrayage montés en fonctionnement sur l'autre des bielles de changement de vitesse, avec l'ensemble de boîte de vitesses monté sur le châssis du tracteur, appareil caractérisé en ce qu'il comprend:

— des moyens de verrouillage (76) à commande hydraulique montés à l'intérieur des moyens de boîtier (32) pour fixer la bielle de changement de vitesse (24) au châssis (14) du tracteur lorsque la cabine (12) du tracteur se trouve en position basse normale, et pour libérer la bielle de changement de vitesse (24) du châssis (14) du tracteur, lorsque la cabine (12) du tracteur est relevée en position inclinée.

2. Appareil d'embrayage de changement de vitesse selon la revendication 1, caractérisé en ce que les moyens de verrouillage (76) comprennent un manchon cylindrique (78) monté à l'intérieur des moyens de boîtier (32) pour recevoir en fonctionnement les moyens d'embrayage (26), et en ce que l'appareil comprend:

— des moyens (92) portés par le manchon cylindrique (78) pour engager ou libérer sélectivement les moyens d'embrayage (26), et

— un manchon de verrouillage/déverrouillage (106) enrourant télescopiquement le manchon cylindrique (78) pour retenir en fonctionnement les moyens (92) en position active, ou pour permettre à ces moyens (92) d'être déverrouillés et libérés de leur engagement avec les moyens d'embrayage (26).

3. Appareil d'embrayage de changement de vitesse selon la revendication 2, caractérisé en ce que les moyens de verrouillage (76) comprennent:

— des moyens (92) montés à l'intérieur d'ouvertures (88) ménagées radialement à travers le manchon cylindrique (78), pour effectuer un mouvement radial se rapprochant et s'écartant de l'axe central du manchon cylindrique (78) et venant se verrouiller et se déverrouiller avec les moyens d'embrayage (26).

4. Appareil d'embrayage de changement de vitesse selon la revendication 3, caractérisé en ce que les moyens de verrouillage (76) comprennent, en outre:

— une cavité annulaire supérieure ménagée dans la partie de rebord intérieur (122) du manchon de verrouillage/déverrouillage (106) pour permettre aux moyens (92) montés à l'intérieur des ouvertures (88), de s'écarter radialement de l'axe central du manchon cylindrique (78) et de se dégager des moyens d'embrayage (26) lorsque la cavité annulaire vient se juxtaposer axialement sur les moyens de verrouillage (76), et

— des moyens de chambre hydraulique annulaire (112) permettant le mouvement télescopique axial du manchon de verrouillage/déverrouillage par rapport au manchon cylindrique (78), de manière à amener sélectivement la cavité annulaire en juxtaposition axiale avec les moyens de verrouillage (76), et

— des moyens de ressort reliés au manchon de verrouillage/déverrouillage (106) pour serrer normalement ce manchon de verrouillage/déverrouillage (106) dans une position télescopique axiale par rapport au manchon cylindrique (78), de manière à verrouiller les moyens (92) montés dans les ouvertures (88) du manchon cylindrique (78) en engagement radial avec les moyens d'embrayage (26).

5. Appareil d'embrayage de changement de vitesse selon la revendication 4, caractérisé en ce que les moyens (92) montés dans les ouvertures (88) comprennent des moyens de billes sphériques pouvant, en fonctionnement, être amenés en position de verrouillage et de déverrouillage par rapport aux moyens d'embrayage (26).

6. Appareil d'embrayage de changement de vitesse selon la revendication 5, caractérisé en ce que les moyens de verrouillage à commande hydraulique comprennent:

— une coupelle généralement cylindrique (78) montée à l'intérieur des moyens de boîtier (32) pour recevoir en fonctionnement les moyens d'embrayage (26); et

— une ouverture (102) ménagée à travers la base (100) de la coupelle cylindrique (78) et à travers les moyens de boîtier (32) pour laisser sortie le fluide collecté par inadvertance dans la coupelle cylindrique (78).

7. Appareil d'embrayage de changement de vitesse selon la revendication 5, caractérisé en ce que les moyens de boîtier (32) sont montés élastiquement sur le châssis (14) du tracteur pour permettre un certain degré de déplacement par rapport au châssis du tracteur.

FIG.1

FIG.2

FIG.3

FIG.4